# EUROPEAN PATENT APPLICATION

(11) **EP 3 205 215 A1**
(43) Date of publication of application: **16.08.2017**
(21) Application number: 17162041.2
(22) Date of filing: 24.06.2010
(51) Int. Cl.: A23L 25/10

(54) **PEANUT BUTTER AND RELATED PRODUCTS ENRICHED WITH OMEGA-3**

(30) Priority: 30.06.2009 US 221846 P
(62) Divisional of application: 10732557.3
(71) Applicant: Monsanto Technology LLC, Saint Louis, MO 63167 (US)
(72) Inventor: WILKES, Richard S., Chesterfield, MO 63017 (US)
(74) Representative: dompatent von Kreisler Selting Werner - Partnerschaft von Patent- und Rechtsanwälten mbB

(57) **Abstract**

The present disclosure provides for improved nut butter and nut butter spread formulations and methods of producing such formulations by incorporating healthy lipids containing stearidonic acid into the formulations. In one embodiment of the disclosure, a peanut butter formulation including a SDA-enriched oil is disclosed. In another embodiment of the disclosure, a peanut butter spread formulation including a SDA-enriched soybean oil is disclosed.

## Description

### FIELD OF THE DISCLOSURE

The disclosure relates to the enhancement of desirable characteristics in nut butter and nut butter spread formulations such as peanut butter through the incorporation of beneficial fatty acids. More specifically, it relates to nut butter and nut butter spread formulations comprising polyunsaturated fatty acids including stearidonic acid and to methods of producing the butters and spread formulations thereof. These modified nut butter and butter spread formulations show an improvement in nutritional quality while maintaining shelf-life and taste compared to conventional nut butters and nut butter spread formulations.

### BACKGROUND OF THE DISCLOSURE

The present disclosure is directed to nut butter formulations and nut butter spread formulations such as peanut butter and peanut butter spreads including stearidonic acid ("SDA") or SDA-enriched oil. Specifically, the present disclosure provides nut butter and nut butter spread formulations that have improved nutritional quality and methods of producing the butters and butter spreads.

The high nutritional value and good taste make nut butter formulations, particularly peanut butter, an important food product in many households. New methods to improve the consumer appeal of peanut butters in respect to nutritional value, taste, and texture are continually being sought. These include methods of improving nut butters having typical fat levels (approximately 50-55% (by weight)) and those having reduced fat levels.

Many studies have made a physiological link between dietary fats and pathologies such as obesity and atherosclerosis. In some instances, consumption of fats has been discouraged by the medical establishment. More recently, the qualitative differences between dietary fats and their health benefits have been recognized.

Recent studies have determined that despite their relatively simple biological structures, there are some types of fats that appear to improve body function in some ways. Some fats may, in fact, be essential to certain physiological processes. The wider class of fat molecules includes fatty acids, isoprenols, steroids, other lipids and oil-soluble vitamins. Among these are the fatty acids. The fatty acids arc carboxylic acids, which have from 2 to 26 carbon atoms in their "backbone," with none or few desaturated sites in their carbohydrate structure. They generally have dissociation constants (pKa) of about 4.5 indicating that in normal body conditions (physiological pH of 7.4) the vast majority will be in a dissociated form.

With continued experimentation, workers in the field have begun to understand the nutritional need for fats and in particular fatty acids in the diet. For this reason, many in the food industry have begun to focus on fatty acids and lipid technology as a new focus for food production, with its consequent benefits for the consumers consuming the modified products. This focus has been particularly intense for the production and incorporation of omega-3 fatty acids into the diet. Omega-3 fatty acids are long-chain polyunsaturated fatty acids (18-22 carbon atoms in chain length) (LC-PUFAs) with the first of the double bonds ("unsaturations") beginning with the third carbon atom from the methyl end of the molecule. They are called "polyunsaturated" because their molecules have two or more double bonds "unsaturations" in their carbohydrate chain. They are termed "long-chain" fatty acids since their carbon backbone has at least 18 carbon atoms. In addition to stearidonic acid "SDA" the omega-3 family of fatty acids includes alpha-linolenic acid ("ALA"), eicosatetraenoic acid (ETA), eicosapentaenoic acid ("EPA"), docosapentaenoic acid (DPA), and docosahexaenoic acid ("DHA"). ALA can be considered a "base" omega-3 fatty acid, from which EPA and DHA are made in the body through a series of enzymatic reactions, including the production of SDA. Most nutritionists point to DHA and EPA as the most physiologically important of the omega-3 fatty acids with the most beneficial effects. However, SDA has also been shown to have significant health benefits. See for example, US patent 7,163,960 herein incorporated by reference. Furthermore, it has now been shown that SDA readily enriches the EPA level in red blood cells.

The synthesis process from ALA is called "elongation" (i.e., the molecule becomes longer by incorporating new carbon atoms) and "desaturation" (i.e., new double bonds are created), respectively. In nature, ALA is primarily found in certain plant leaves and seeds (e.g., flax) while EPA and DHA mostly occur in the tissues of cold-water predatory fish (e.g., tuna, trout, sardines and salmon), and in some marine algae or microbes that they feed upon.

In addition to difficulties with simply securing an appropriate supply of LC-PUFAs for societal consumption, often the cost to process LC-PUFAs into food products is restrictive. These omega-3 fatty acids, and some of the other LC-PUFAs can be quickly oxidized leading to undesirable odors and flavors. To reduce the rate of oxidation food processors must therefore either distribute the oil in a frozen condition or encapsulate the desirable fatty acids, each greatly increasing the cost of processing and consequent cost to the consumer. Despite this increased expense, food companies are interested in supplying omega-3 fatty acids and generally healthier food oils because they believe that health conscious consumers may be willing to pay a small premium for an improved diet if a reliable supply can be developed.

Along with the movement of food companies to develop and deliver essential fats and oils as an important component in a healthy human diet, governments have begun developing regulations pushing for the adoption of PUFAs in the diet. There has been difficulty in supplying these needs, however, as there has been an inability to develop a large enough supply of omega-3 containing oil to meet growing marketplace demand.

Furthermore, as already mentioned, the omega-3 fatty acids commercially deemed to be of highest value, EPA and DHA, which are provided in marine sources, also chemically oxidize very quickly over time limiting commercial availability. Importantly, during the rapid process of EPA and DHA degradation these long chain fatty acids develop rancid and profoundly unsatisfactory sensory properties (e.g., fishy odor and taste) that make their inclusion in many foodstuffs or products difficult or impossible from a commercial acceptance perspective.

Furthermore, attempts at incorporating traditional omega-3 fatty acids such as alpha-linolenic acid (ALA) are not practical as these fatty acids are not converted to the beneficial forms efficiently enough. Nutritional studies have shown that, compared to ALA, SDA is 3 to 4 times more efficiently converted in vivo to EPA in humans (Ursin, 2003).

These limitations on supply, stability and sourcing greatly increase cost and correspondingly limit the availability of dietary omega-3 fatty acids. Accordingly, a need exists to enhance the nutritional quality and shelf-life of foodstuffs, and in particular, of nut butter and nut butter spread formulations such as peanut butter. The SDA-containing formulations of the current disclosure not only provide needed dietary fat for specific consumers, but also provide other dietary improvements for the commercial production of nut butter and nut butter spread formulation.

In addition, a need exists to provide a consumer-acceptable means of delivering EPA and DHA or critical precursors in nut butter and nut butter spread formulations in a commercially acceptable way. The current disclosure provides an alternative to fish or microbe-supplied omega-3 fatty acids in the form of nut butter and butter spread formulations comprising beneficial omega-3 fatty acids and does so utilizing a comparatively chemically stable omega-3 fatty acid, SDA, as a source that offers improved cost-effective production and abundant supply as derived from transgenic plants.

### SUMMARY OF THE DISCLOSURE

The present disclosure includes the incorporation of oil from transgenic plants engineered to contain significant quantities of stearidonic acid (18:4ω3) (SDA) for use in nut butter formulations and nut butter spread formulations to improve the fatty acid profile in the resulting formulations and/or the health of an end consumer. According to embodiments of the current disclosure, SDA-containing oils provide enhanced nutritional quality relative to traditional omega-3 alternatives such as flaxseed and lack negative taste and low stability characteristics associated with fish oil. Therefore, a preferred embodiment of this disclosure includes a nut butter formulation with an increased level of beneficial polyunsaturated fatty acids such as SDA. The nut butter formulation includes SDA-enriched oil and at least 90% (by weight) of a nut compound.

In another embodiment of the disclosure, a nut butter spread formulation with an increased level of beneficial polyunsaturated fatty acids such as SDA is provided. The nut butter spread formulation includes SDA-enriched oil and less than 90% (by weight) of a nut compound.

In another embodiment of the disclosure, a low carbohydrate peanut butter formulation including SDA-enriched soybean oil is provided.

In another embodiment of the disclosure, a reduced fat peanut butter formulation including SDA-enriched soybean oil is provided.

In another embodiment of the disclosure, a low carbohydrate peanut butter spread formulation including SDA-enriched soybean oil is provided.

In another embodiment of the disclosure, a reduced fat peanut butter spread formulation including SDA-enriched soybean oil is provided.

Furthermore, methods of making the nut butter and nut butter spread formulations as described above are disclosed. These methods may include mixing ground, roasted nuts with SDA-enriched oil to form a SDA-enriched nut product; milling the SDA-enriched nut product to produce a nut butter formulation; and cooling the nut butter formulation. In some embodiments, at least one additional component, such as stabilizers, sweeteners, flavoring agents, bulking agents, fillings, and particulates may be added to the SDA-enriched nut product prior to milling.

Exemplary stearidonic acid sources for obtaining the stearidonic acid-enriched oil may include transgenic soybeans, transgenic soybean oil, transgenic canola, transgenic canola oil, echium, and echium oil. Additional stearidonic acid sources may include seeds such as soybeans, safflower, canola, echium and corn.

In at least one embodiment, the SDA-enriched oil includes from about 10% (by weight) to about 60% (by weight) of SDA. In another embodiment, the SDA-enriched oil includes from about 10% (by weight) to about 30% (by weight) of SDA. In an even more particularly preferred embodiment, the SDA-enriched oil includes about 20% (by weight) SDA.

In at least one embodiment, the spread formulation including the SDA-enriched oil includes about 375 mg SDA-enriched oil in a 32-gram serving of the spread formulation. This amount ensures providing the end consumer with the minimum amount of SDA per day needed to enrich EPA in tissues based on James, et al. (2003). The amount of SDA in the enriched oil may vary due to Germplasm, environmental effects, and the like. Typically, however, the SDA-enriched oil provides from about 10% (by weight) to about 60% (by weight) SDA, more preferably from about 10% (by weight) to about 30% (by weight), and even more preferably, about 20% (by weight) SDA.

Other features and advantages of this disclosure will become apparent in the following detailed description of preferred embodiments of this disclosure, taken with reference to the accompanying figures.

### BRIEF DESCRIPTION OF THE FIGURE

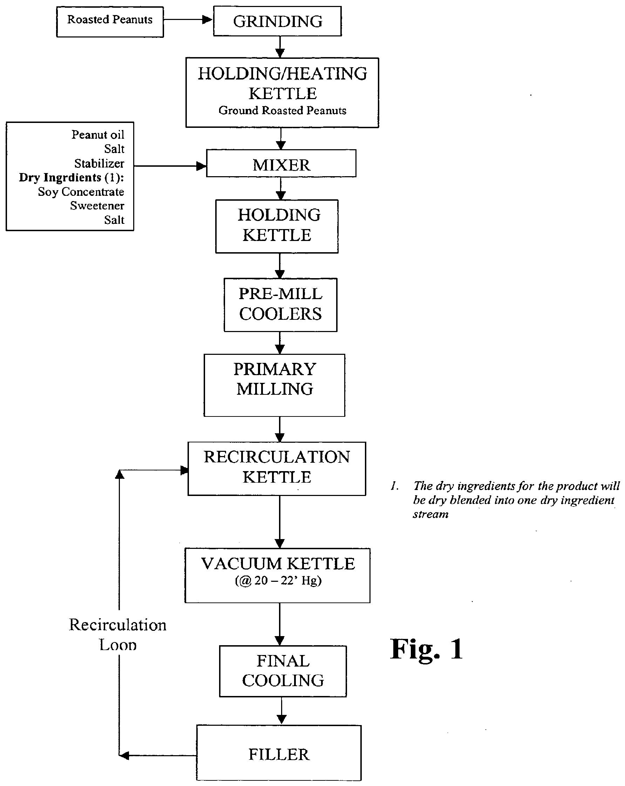

Fig. 1 depicts one embodiment of the present disclosure for producing the formulations including an SDA-enriched oil.

### DEFINITIONS

The following definitions are provided to aid those skilled in the art to more readily understand and appreciate the full scope of the present disclosure. Nevertheless, as indicated in the definitions provided below, the definitions provided are not intended to be exclusive, unless so indicated. Rather, they are preferred definitions, provided to focus the skilled artisan on various illustrative embodiments of the disclosure.

As used herein, the term "nut butter" refers to a nut-containing butter formulation including at least 90% (by weight) of a nut compound, and would include butter formulations such as peanut butter as defined by the U.S. Standard of Identity in 21CFR164.150. While described herein as being a peanut compound, it should be understood that the nut compound may include cashews, almonds, walnuts, pecans, filberts, macadamia nuts, Brazilians, hazel nuts, sunflower seeds, sesame seeds, pumpkin seeds, soybeans, and combinations thereof without departing from the scope of the present disclosure. Moreover, the nut compound may be in the form of whole nuts, split nuts, ground nuts, nut slurry, nut flour, nut oil, and combinations thereof. For example, in one particular embodiment, when the nut butter formulation is a chunky formulation (e.g., chunky peanut butter or chunky peanut butter spread), the nut compound includes at least one of whole nuts and split nuts in an amount of from about 10% (by weight) to about 25% (by weight). In a more preferred embodiment, the chunky nut butter formulation includes about 18% (by weight) of at least one of whole nuts and split nuts.

As used herein, the term "nut butter spread formulation" refers to a spread formulation including less than 90% (by weight) of a nut compound, and would include peanut butter spreads. Under U.S. FDA regulations of January 1, 2003, nut butter spread formulation, and particularly, peanut butter spread formulation, refers to a spreadable product having at least 40% nut (peanut) compounds, which can be added in various forms, e.g., as nuts, a paste and/or a slurry. The percent by weight of nuts in the present formulation can range especially from 55 to 80%, more particularly from 60-75%, and even higher for standard nut butter spread formulations.

As used herein, the term "SDA-enriched oil" refers to an oil including at least about 10% (by weight) SDA.

### DETAILED DESCRIPTION OF THE DISCLOSURE

### Production of SDA:

The present disclosure relates to a system for an improved method for the plant based production of stearidonic acid and its incorporation into the diets of humans in an effort to improve human health. This production is made possible through the utilization of transgenic plants engineered to produce SDA in sufficiently high yield so as to allow commercial incorporation into food products. For the purposes of the current disclosure the acid and salt forms of fatty acids, for instance, butyric acid and butyrate, arachidonic acid and arachidonate, will be considered interchangeable chemical forms.

All higher plants have the ability to synthesize the main 18 carbon PUFAs, LA and ALA, and in some cases SDA (C18:4n3, SDA), but few are able to further elongate and desaturate these to produce arachidonic acid (AA), EPA or DHA. Synthesis of EPA and/or DHA in higher plants therefore requires the introduction of several genes encoding all of the biosynthetic enzymes required to convert LA into AA, or ALA into EPA and DHA. Taking into account the importance of PUFAs in human health, the successful production of PUFAs (especially the n-3 class) in transgenic oilseeds, according to the current disclosure can then provide a sustainable source of these essential fatty acids for dietary use. The "conventional" aerobic pathway which operates in most PUFA-synthesizing eukaryotic organisms, starts with Δ6 desaturation of both LA and ALA to yield γ-linolenic (GLA, 18:3n6) and SDA.

Turning to Table 1, it is important to provide a basis of what constitutes "normal" ranges of oil composition vis-à-vis the oil compositions of the current disclosure. A significant source of data used to establish basic composition criteria for edible oils and fats of major importance has been the Ministry of Agriculture, Fisheries and Food (MAFF) and the Federation of Oils, Seeds and Fats Associations (FOSFA) at the Leatherhead Food International facility in the United Kingdom.

To establish meaningful standards data, it is preferred that sufficient samples be collected from representative geographical origins and that these oils are pure. In the MAFF/FOSFA work, over 600 authentic commercial samples of vegetable oilseeds of known origin and history, generally of ten different geographical origins, were studied for each of 11 vegetable oils. The extracted oils were analyzed to determine their overall fatty acid composition ("FAC"). The FAC at the 2-position of the triglyceride, sterol and tocopherol composition, triglyceride carbon number and iodine value, protein values in the oil, melting point and solid fat content as appropriate are determined.

Prior to 1981, FAC data were not included in published standards because data of sufficient quality was not available. In 1981, standards were adopted that included FAC ranges as mandatory compositional criteria. The MAFF/FOSFA work provided the basis for later revisions to these ranges.

In general, as more data became available, it was possible to propose fatty acid ranges much narrower and consequently more specific than those adopted in 1981. Table 1 gives examples of FAC of oils that were adopted by the Codex Alimentarius Commission (CAC) in 1981 and ranges for the same oils proposed at the Codex Committee on Fats and Oils (CCFO) meeting held in 1993.

**Table 1 - Standards For Fatty Acid Composition Of Oils (% Of Oil)**

| | **Soybean oil** | | **Groundnut oil** | | **Cottonseed oil** | | **Sunflower-seed oil** | |
|---|---|---|---|---|---|---|---|---|
| **Fatty acid** | **981** | **993** | **981** | **993** | **981** | **993** | **981** | **993** |
| 14:0 | 0.5 | 0.2 | 0.6 | 0.1 | .4-2 | .6-1 | 0.5 | 0.2 |
| 16:0 | -14 | -13.3 | -16 | .3-14 | 7-31 | 1.4-26.4 | -10 | .6-7.6 |
| 16:1 | 0.5 | 0.2 | 1 | 0.2 | .5-2 | -1.2 | 1 | 0.3 |
| 18:0 | .4-5.5 | .4-5.4 | .3-6.5 | .9-4.4 | -4 | .1-3.3 | -10 | .7-6.5 |
| 18:1 | 9-30 | 7.7-26.1 | 5-72 | 6.4-67.1 | 3-44 | 4.7-21.7 | 4-65 | 4-39.4 |
| 18:2 | 4-62 | 9.8-57.1 | 3-45 | 4-43 | 3-59 | 6.7-58.2 | 0-75 | 8.3-74 |
| 18:3 | -11 | .5-9.5 | 1 | 0.1 | .1-2.1 | -0.4 | -0.7 | -0.2 |
| 20:0 | 1 | .1-0.6 | -3 | .1-1.7 | -0.7 | .2-0.5 | -1.5 | .2-0.4 |
| 20:1 | 1 | 0.3 | .5-2.1 | .7-1.7 | -0.5 | -0.1 | -0.5 | -0.2 |
| 22:0 | 0.5 | .3-0.7 | -5 | .1-4.4 | -0.5 | -0.6 | -1 | .5-1.3 |
| 22:1 | | 0.3 | 2 | 0.3 | -0.5 | -0.3 | -0.5 | -0.2 |
| 22:2 | | | | | | | | -0.3 |
| 24:0 | | 0.4 | .5-3 | .1-2.2 | -0.5 | -0.1 | -0.5 | .2-0.3 |
| 24:1 | | | | 0.3 | | | 0.5 | |

### Sources: Codex Alimentarius Commission, 1983 and 1993.

More recently, oils from transgenic plants have been created. Some embodiments of the present disclosure may incorporate products of transgenic plants such as transgenic soybean oil. Transgenic plants and methods for creating such transgenic plants can be found in the literature. See for example, WO2005/021761A1. As shown in Table 2, the composition of the transgenic soy oil is substantially different than that of the accepted standards for soy oil.

**Table 2. A comparison of transgenic soy oil and traditional soy oil fatty acid compositions (% of Oil)**

| | **Low SDA Soy Oil** | **Medium SDA Soy Oil** | **High SDA Soy Oil** |
|---|---|---|---|
| C14:0 (Myristic) | 0.10 | 0.11 | 0.10 |
| C16:0 (Palmitic)) | 12.23 | 12.33 | 12.52 |
| C16:1 (Palmitoleic) | 0.10 | 0.10 | 0.15 |
| C18:0 (Stearic) | 3.95 | 3.99 | 4.10 |
| C18:1 (Oleic) | 16.21 | 15.50 | 15.17 |
| C18:2 (Linoleic) | 34.04 | 29.40 | 18.46 |
| C18:3 n6 (Gamma Linolenic) | 4.30 | 5.50 | 4.71 |
| C18:3 n3 (Alpha-Linolenic) | 11.64 | 11.14 | 12.78 |
| C18:4 n3 (Stearidonic) | 14.51 | 18.86 | 28.92 |
| C20:0 (Arachidic) | 0.34 | 0.35 | 0.38 |
| C20:1 (Eicosenoic) | 0.21 | 0.21 | 0.22 |
| C22:0 (Behenic) | 0.32 | 0.32 | 0.34 |
| C24:0 (Lignoceric) | 0.10 | 0.09 | 0.09 |
| Other fatty acids | 0.56 | 0.60 | 0.69 |

According to embodiments of the current disclosure, the preferred plant species that could be modified to reasonably supply demand are: soybeans, canola, and echium but many other plants could also be included as needed and as scientifically practicable. For the present disclosure, the preferred source of SDA is transgenic soybeans which have been engineered to produce high levels of SDA. The soybeans may be processed at an oil processing facility and oil may be extracted consistent with the methods described in US Patent Applications 2006/0111578A1, 2006/0110521A1, and 2006/0111254A1.

It should be recognized that once produced, the SDA of the disclosure can be used to improve the health characteristics of a great variety of nut butter and nut butter spread formulations. This production offers a sustainable crop-based source of omega-3 fatty acids that enriches EPA in red blood cells and other tissues, and has improved flavor and stability as compared to many alternative omega-3 fatty acid sources available today.

### Nut Butter/Nut Butter Spread Formulation:

As noted above, the nut butter and nut butter spread formulations of the present disclosure include an SDA-cnrichcd oil. In additional to the SDA-enriched oil, the nut butter and nut butter spread formulations may further include stabilizers, including oils such as hydrogenated oils, and partially hydrogenated oils. Exemplary of these additional oils include partially hydrogenated oils having a solids fat index of from about 19% to 25.5% at 50°F (10°C), from about 10.5% to about 15.5% at 70°F (21°C), and from about 0.5% to about 4.0% at 92°F (33°C). Hydrogenated oils having this solids fat index will provide the nut butter or nut butter spread formulation with the desired plastic texture. Furthermore, these oils will prevent separation of the formulations and allow the formulations to adequately spread on food products, such as is desired of the formulations. Suitable stabilizers include hydrogenated or partially hydrogenated soybean oil, canola oil, rapeseed oil, cottonseed oil, linseed oil, coconut oil, walnut oil, or palm oil with the ground, roasted nuts and SDA-enriched oil and combinations thereof. Commercial hydrogenated and partially hydrogenated oils typically used in the formulations are available from Loders Croklaan (Channahon, Illinois). Specifically, particularly preferred stabilizers include StaSct RC or StaSct RCS, available from Loders Croklaan (Channahon, Illinois).

Typically, the formulations include these stabilizers in amounts of from about 0% (by weight) to about 2.5% (by weight). More particularly, the formulations may include these stabilizing oils in amounts of from about 0.3% (by weight) to about 2.0% (by weight). In one particularly preferred embodiment, the formulation includes these stabilizing oils in an amount of about 1.2% (by weight).

Another particularly preferred liquid oil that may be used in the formulations, particularly when the formulation is a peanut butter formulation or peanut butter spread, is peanut oil. Commercially available peanut oils are available from Golden Peanut Company (Alpharetta, Georgia). Typically, the formulations can include peanut oil in an amount of from about 0% (by weight) to about 8% (by weight).

Apart from the above blend of oils, the formulation may include minor fat-soluble ingredients such as emulsifiers, flavoring agents, and combinations thereof.

Exemplary emulsifiers that can be included in the formulations include monoglycerides and diglycerides. The monoglycerides and diglycerides can further stabilize the formulations. Exemplary monoglycerides and diglycerides include those commercially available from Eastman Chemical Company (Kingsport, Tennessee) and Danisco (New Century, Kansas). Particularly suitable monoglycerides are Dimodan Distilled monoglycerides, commercially available from Danisco (New Century, Kansas).

Typically, when used, the formulation includes monoglycerides and diglycerides in amounts of from about 0.1% (by weight) to about 1.0% (by weight). In one particular embodiment, the formulation includes monoglycerides and diglycerides in an amount of about 0.3% (by weight).

In many nut butter and butter spread formulations provided in the present disclosure, it is desirable to enhance the flavoring. For example, in some embodiments, it is desirable to include a sweetener in the formulation. Sweeteners which can be added as ingredients of the formulation include, for example, sucrose, dextrose, fructose, honey, molasses, corn syrup, brown sugar, and combinations thereof.

A typical nut butter formulation or nut butter spread formulation will include from about 0.01% (by weight) to about 20% (by weight). In some embodiments, the formulations will include from about 3.0% (by weight) to about 8.0% (by weight).

Additional flavoring agents may include salt or salt substitutes, seasoning salts, natural nut flavorings, and the like, and combinations thereof. Typically, these additional flavoring agents may be used in amounts of from about 0% (by weight) to about 3.0% (by weight).

When used, salts, such as sodium chloride and potassium chloride, are typically included in an amount of from about 1.0% (by weight) to about 3.0% (by weight) to behave as a flavoring agent. More suitably, salts can be included in an amount of from about 1.0% (by weight) to about 1.5% (by weight), and even more suitably, about 1.2% (by weight).

Vegetable proteins may be included in the formulations to provide improved nutritional value, and specifically, to increase the protein levels of the formulations. Exemplary vegetable proteins include soy proteins, such as soy protein isolate and soy protein concentrate.

When used, additional proteins are included in the formulations in amounts of from about 1% (by weight) to about 10% (by weight). In one particular embodiment, the formulation includes at least one protein in an amount of from about 6.0% (by weight) to about 8.0% (by weight).

In at least one embodiment, a reduced fat content is desirable. Specifically, in recent years, the consumption of reduced and low fat products has increased and intensive research has been made in processing and ingredients in order to achieve better low fat products. In such an embodiment, the formulation may further include bulking agents such as a polydextrose, maltodextrin, corn syrup solids, methocellulose derivatives (such as microcrystalline cellulose) and combinations thereof.

Typically, when used in the formulations, the bulking agents can represent up to about 60% (by weight) of the formulation. In some particular embodiments, the formulations include one or more bulking agents in amounts of from about 1.0% (by weight) to about 60% (by weight), and more suitably, from about 10% (by weight) to about 60% (by weight).

Other additional components that may be included in the nut butter formulations and the nut butter spread formulations include, for example, fillings and particulates. Fillings can be defined as sweet or savory food mixtures used to fill food products. Examples of fillings/filling components include: nut pieces, fruit, chocolate, jams/ jellies, apricot, cherry, blueberry, guava, lemon, mango, raspberry, strawberry, papaya, marshmallow, and banana. Often fillings will include a gel material such as a pectin and carageenan. Gum bases, such as guar, are also common. The filling will generally be low in water activity. Fillings generally impart flavor and/or solids and/or texture to the food products (i.e., nut butter formulations and nut butter spread formulations).

Particulates such as graham, puffed rice, nut pieces, and chocolate morsels may also be used in the formulations. Particulates may impart texture and/or flavor to the formulations.

### Methods of Producing Nut Butter and Nut Butter Spread Formulations:

Additionally, the present disclosure is directed to methods of making the formulations including SDA. Generally, the formulations of the present disclosure are generally produced by: mixing ground, roasted nuts with SDA-enriched oil to form a SDA-enriched nut product; milling the SDA-enriched nut product to produce a nut butter formulation; and cooling the nut butter formulation (see Figure 1).

Typically, to begin, raw nuts are roasted at temperatures of from about 290°F (143°C) to about 370°F (188°C), and more suitably, at a temperature of about 320°F (160°C). Roasting provides nut flavor, color and kills bacteria present in the raw nuts. In some embodiments, the nuts are blanched. Any of the conventional roasting and blanching techniques can be used to prepare the nuts for further processing. The roasted full fat nuts are then sorted to eliminate damaged nuts, which may be contaminated with aflatoxin.

The roasted sorted nuts are ground into a course paste using a mill such as a Bauer mill at temperatures of from about 140°F (60°C) to about 180°F (82°C), and more suitably, at temperatures of from about 155°F (68°C) to about 170°F (77°C). Throughout the remainder of the process, this temperature is maintained to allow for proper mixing, to keep any stabilizers melted, and to control any additional roasting or off flavor development.

The remaining ingredients, such as SDA-enriched oil, and any additional components, are then added to the slurry of ground roasted full fat nuts in accordance with the formulation and thoroughly mixed.

In some embodiments, the nut butter product may be further dearated in a conventional vacuum kettle or thin film versator to remove residual air from the product. Dearation minimizes the oxidative rancidity of any triglycerides present in the resulting nut butter and nut butter spread formulations.

Next, the thus produced SDA-enriched nut product is milled using any milling device known in the art. In some embodiments, the SDA-enriched nut product may be cooled, such as by votating, to a temperature of about 125°F (51.7°C) prior to milling to prevent excessive heat during milling, which can negatively impact flavor and color of the end formulation.

In some embodiments, the nut product is further fine milled, e.g. in a Urschel mill, to produce a nut butter formulation (or nut butter spread formulation) having a particle size of about 150 microns.

As an alternative to fine milling, the nut product may be further processed by homogenizing. It is important that homogenization takes place under relatively high pressures, i.e. from about 4,000 psig to about 14,000 psig, preferably from about 6,000 psig to about 8,000 psig. Pressures higher than about 10,000 psig yield a smoother and more spreadable formulation.

Additionally, in some embodiments, as mentioned above, it is desirable to have a reduced fat nut butter/nut butter spread formulation. It has been found that by incorporating bulking agents as described above, and further using an intermediate high pressure homogenization step for reducing the viscosity of the formulation produces reduced fat nut butter formulations having the taste and consistency of their full fat counterparts.

In some embodiments, the resulting SDA-cnrichcd nut product may optionally be further processed by passing the product through an extruder mixer, such as a twin screw extruder, in order for the components of the product to be more intimately mixed, simultaneously with the generation of free nut oil that may be in the nut product. For example, a twin screw extruded manufactured by Rcadco is useful in the practice of the method in accordance with the present disclosure.

The twin screw extruder has two parallel shafts containing agitators conforming closely to walls of the shafts. The close clearance between the shafts and the agitators provides an unexpectedly efficacious mixing and cleaning action. As the agitators rotate, a backward-forward motion is provided along with the progressive moving of the combination of nut slurry (i.e., ground roasted nuts) and other ingredients. It has been found that the mixing action produces a combination of shear, whipping, folding, stretching and compressing forces that enables relatively large amounts of non-fat dry solids, such as bulking agents, to be incorporated into nut butter formulations without adversely affecting the taste and consistency of the resulting formulation.

Alternatively, during the addition of the bulking agents, an intermediate process step may be added to further blend and reduce the viscosity of the nut product to allow for further processing. Specifically, homogenizers or special mills comprising a stator and a circularly rotating rotor capable of grinding the nut product while producing centrifugal forces may be used. These additional steps are described in U.S. Patent No. 7,235,277, which is hereby incorporated by reference to the extent that it is consistent herewith.

The specific conditions for intimately mixing the combination of ingredients depend upon the particular nut butter formulation. In general, however, it has been found that a clearance of from essentially zero to about 5 mm, and preferably from about 1 mm to about 2 mm, is suitable. The specific combination of clearance, mixing rate and residence time will depend on the size of the extruder and the type of mixing desired. The specific conditions for any particular nut butter formulation will be readily determinable to one skilled in the art without undue experimentation.

Once thoroughly mixed and milled, the nut butter or nut butter spread formulation is cooled using scraped surface heat exchangers, such as commercially available as Cherry Burrcll Votator (Waukesha Cherry Burrcll, Delavan, Wisconsin). Cooling helps to establish the proper fat crystal formulation (β'). Typically, the formulation is cooled to a temperature of from about 85°F (29°C) to about 120°F (49°C), depending on the stabilizers present in the formulation and the equipment used in the above processing.

Surprisingly, the inventors have found that including SDA compositions from transgenic plant sources in nut butter and butter spread formulations as described above is highly effective in increasing the omega-3 fatty acid levels of SDA (18:4), which later converts to EPA (eicosapentaenoic acid) once consumed.

Furthermore, there has been found to be little difference in the flavor, texture, or overall consumer acceptability, of the nut butter and butter spread formulations including SDA (e.g., peanut butter and peanut butter spread formulations) as compared to conventional peanut butter and peanut butter spread formulations without omega-3 fatty acids. Specifically, as shown in the Examples below, SDA-containing peanut butter spread formulations had similar basic tastes attributes as compared to conventional peanut butter spread formulations without omega-3 fatty acids.

Furthermore, as compared to peanut butter spread formulations including alternative omega-3 fatty acids, the basic tastes of the peanut butter spread formulation including SDA were the most similar to conventional peanut butter.

### ILLUSTRATIVE EMBODIMENTS OF THE DISCLOSURE

The following examples are included to demonstrate general embodiments of the disclosure. It should be appreciated by those of skill in the art that the techniques disclosed in the examples which follow represent techniques discovered by the inventors to function well in the practice of the disclosure, and thus can be considered to constitute preferred modes for its practice. However, those of skill in the art should, in light of the present disclosure, appreciate that many changes can be made in the specific embodiments which are disclosed and still obtain a like or similar result without departing from the disclosure.

All of the formulations and methods disclosed and claimed herein can be made and executed without undue experimentation in light of the present disclosure. While the formulations and methods of this disclosure have been described in terms of preferred embodiments, it will be apparent to those of skill in the art that variations may be applied without departing from the concept and scope of the disclosure.

In the examples below, transgenic soybean oil containing SDA is/was used. Similar results would be obtained when using oil derived from other transgenic plants such as corn or canola.

### Example 1: 86% Peanut Butter Spread

In this Example, SDA-enriched soybean oil was substituted for peanut oil in an 86% (by weight) peanut butter spread formulation. A sensory study was then conducted to determine whether the peanut butter spread formulation containing SDA had equivalent sensory attributes as compared to a control peanut butter spread formulation (i.e., conventional peanut butter spread formulation without SDA) and commercially available peanut butter spread formulations.

The peanut butter spread formulation with SDA is shown in Table 3. The control spread formulation was made with the same formulation as the peanut butter spread formulation with SDA with the exception of adding soybean oil to the formulation in place of the SDA. The commercially available peanut butter spread formulations included Jif Peanut Butter Spread (The J.M. Smucker Co., Orrville, Ohio) and Smart Balance Omega-3 Peanut Butter Spread (Smart Balance, Inc., Paramus, New Jersey).

**Table 3. Spread Formulation**

| **Ingredient** | **Spread Formulation with 20% (by weight) SDA** |
|---|---|
| | **(wt. %)** |
| Ground Roasted Peanuts | 85.9 |
| SDA-cnrichcd soybean oil (Monsanto) | 5.9 |
| Sugar (Sucrose, granulated or powder, Domino, Baltimore, Maryland) | 6.0 |
| Salt (Culinox 999, Morton Salt Co., Chicago, Illinois) | 1.0 |
| Stabilizer (Sta-Set RC, Loders Croklaan, Channahon, Illinois) | 1.2 |
| Total | 100 |

To prepare the spread formulation with SDA, shelled, raw peanuts were roasted at temperatures of from about 290°F (143°C) to about 370°F (188°C) to eliminate any bacterial contamination and achieve the desired color. The roasted peanuts were then sorted and ground to create coarse ground roasted peanut. The additional ingredients including salt, sweeteners, stabilizers, and oils were then added and mixed at a temperature of from about 140°F (60°C) to about 180°F (82C). After thorough mixing, the nut product was further milled using an Urschel Mill (Urschel Laboratories, Inc., Valparaiso, Indiana), and then cooled to the packing temperature of from about 85°F (29°C) to about 120°F (49°C) using scraped surface heat exchanges (e.g., Votator), and packaged.

For the sensory study, a panel of trained assessors (7) participated in discussion and training sessions to identify and define key descriptive attributes that discriminated well between the formulations. In subsequent rating sessions the panel used modified Sensory Quality System (SQS) Results, developed by Gillette and Beckley (Beckley & Kroll, 1996), with verbal anchors to rate the perceived intensity of particular attributes. Specifically, the assessors rated each sample according to a predetermined 5-point scale, which measures quality based on degree of different from the control formulation. The scale is divided into four categories. Specifically, a score of 4-5 is equal to a match; that is the sample has virtually identical sensory characteristics to the control by appearance, aroma, flavor, and texture. A score of 3 is equal to acceptable, which means that the sample meets the definition for the product, but has differences that are easily spotted when comparing side by side with a control. A score of 2 is equal to unacceptable, meaning that the sample does not meet the definition of the product, but possibly can be reworked. A score of 1 is equal to a reject, in which the sample has obvious defects rendering it non-shippable as a product.

Each assessor tested one replicate of each sample. Plain crackers and mineral water were used as palate cleansers between samples. Samples were tasted and chewed, and then spat out rather than being swallowed. The sensory attributes and definitions produced for the formulations were:

### Aromatics

- Overall Flavor: The overall intensity of the product aromas, an amalgamation of
- Impact: all perceived aromatics, basic tastes, and chemical feeling factors.
- Sweet Aromatics: The aromatics associated with sweet foods.
- Peanut: The nutty aromatic associated with roasted peanuts. (Reference - peanuts).
- Painty: The aromatic associated with oxidized oil. (Reference - linseed oil).
- Cardboard/Woody: The aromatics associated with dried wood and the aromatics associated with slightly oxidized fats and oils, reminiscent of a cardboard box. (Reference - toothpicks, water from cardboard soaked for 1 hour).
- Fishy/Pondy: The aroma/aromatics associated with triethylamine, pond water,
- Complex: or aged fish. The general term used to describe fish meat, which cannot be tied to a specific fish by name.
- Fishy: Aromatic associated with trimethylamine and old fish. (Reference - Cod liver oil capsules, trimethylamine, Geisha canned lump crab).
- Pondy: The aromas and aromatics associated with water containing algae, reminiscent of pond water and aquatic tanks (Reference - Algal oil (Martek 30% DHA oil)).

### Basic Tastes

- Sweet: The taste on the tongue stimulated by sucrose and other sugars, such as fructose, glucose, etc., and by other sweet substances, such as saccharin, Aspartame, and Acesulfame-K. (Reference - Sucrose solution: 2%, 5%, 10%, and 16%).
- Sour: The taste on the tongue stimulated by acid, such as citric, malic, phosphoric, etc. (Reference - Citric acid solution: 0.05%, 0.08%, 0.15%, and 0.20%).
- Salt: The taste on the tongue associated with sodium salts. (Reference - Sodium chloride solution: 0.2%, 0.35%, 0.5%, 0.57%, and 0.7%).
- Bitter: The taste on the tongue associated with caffeine and other bitter substances, such as quinine and hop bitters. (Reference - Caffeine solution: 0.05%, 0.08%, 0.15%, and 0.20%).

### Chemical Feeling Factor

- Astringent: The shrinking or puckering of the tongue surface caused by substances such as tannins or alum. (Reference - Alum solution: 0.05%, 0.1%, and 0.3%).

The results of the sensory analysis were calculated as an average of the 7 assessors ratings and shown in Table 4.

**Table 4. Effect of omega-3 enriched oil (peanut butter spread formulation with SDA); conventional soybean oil (control peanut butter spread formulation); and commercially available peanut butter spread formulations on the sensory attributes of 86% peanut butter formulations.**

| **Peanut Butter Spread Formulation** | **SQS Score** | **Diagnostics*** |
|---|---|---|
| Control Peanut Butter Spread | 4.29 | Did not agree on differences. |
| Peanut Butter Spread with SDA | 3.86 | ↑ slightly more Fishy/Pondy Complex v. control spread formulation |
| Smart Balance Omega-3 Peanut Butter Spread | 2.57 | ↓ slightly less Peanut, Sweet, and Salt v. control spread formulation; ↑ slightly more Fishy/Pondy Complex and Fishy Cardboard/Woody, and Painty v. control spread formulation |
| Jif Peanut Butter Spread | 4.00 | ↑ slightly more Cardboard/Woody v. control spread formulation |

Conclusion: The basic taste attributes of the spread formulation with SDA closely resembled the control spread formulation. The Smart Balance Omega-3 Peanut Butter spread formulation rated much lower in quality. These results demonstrate that SDA has the ability to maintain a food product's flavor quality as compared to other omega-3 sources.

### Example 2: 90% Peanut Butter

In this prophetic Example, SDA-enriched soybean oil is substituted for peanut oil and sweeteners in a 90% (by weight) peanut butter formulation.

The peanut butter formulation with SDA is shown in Table 5.

**Table 5. Peanut Butter Formulation**

| **Ingredient** | **Peanut Butter Formulation with 20% (by weight) SDA** (**wt. %)** |
|---|---|
| Ground Roasted Peanuts | 86 |
| Peanut Oil (Golden Peanut Co., Alpharetta, Georgia) | 4.0 |
| SDA-enriched soybean oil (Monsanto) | 5.9 |
| Sugar (Sucrose, granulated or powder, Domino, Baltimore, Maryland) | 2.3 |
| Salt (Culinox 999, Morton Salt Co., Chicago, Illinois) | 0.6 |
| Stabilizer (Sta-Set RC, Loders Croklaan, Channahon, Illinois) | 1.2 |
| Total | 100 |

The peanut butter spread formulation may be prepared and sensory tested as described in Example 1.

### Example 3: Low Carbohydrate Peanut Butter Spread

In this prophetic Example, SDA-enriched soybean oil may be used with a reduced level of peanuts and the elimination of sucrose to provide a peanut butter spread formulation with a desired carbohydrate level.

The low carbohydrate peanut butter spread formulation that may be produced is shown in Table 6. Additional ingredients include the use of microcrystalline cellulose as a bulking agent and soy protein isolate to provide an equivalent protein level as standardized peanut butter spread.

**Table 6. Low Carbohydrate Peanut Butter Spread Formulation**

| **Ingredient** | **Peanut Butter Spread Formulation with 20% (by weight) SDA** (**wt**. **%)** |
|---|---|
| Ground Roasted Peanuts | 65 |
| Peanut Oil (Golden Peanut Co., Alpharetta, Georgia) | 17.09 |
| SDA-enriched soybean oil (Monsanto) | 5.9 |
| Sucrolose (McNeil Nutritionals, LLC, Ft. Washington Pennsylvania) | 0.01 |
| Microcrystalline Cellulose (Avicel LM 310, FMC BioPolymer, Philadelphia, Pennsylvania) | 1.0 |
| Soy Protein Isolate (The Solae Company, St. Louis, Missouri) | 8.0 |
| Salt (Culinox 999, Morton Salt Co., Chicago, Illinois) | 1.2 |
| Stabilizer (Sta-Set RC, Loders Croklaan, Channahon, Illinois) | 1.8 |
| Total | 100 |

The peanut butter spread formulation may be prepared and sensory tested as described in Example 1.

### Example 4: Reduced Fat Peanut Butter Spread

In this prophetic Example, SDA-enriched soybean oil may be used with a reduced level of peanuts to provide a peanut butter spread formulation with a reduced fat level.

The reduced fat peanut butter spread formulation that may be produced is shown in Table 7. Typically, reduced fat peanut butter spread formulations include about 60% (by weight) peanuts. Furthermore, in addition to the typical peanut butter spread components, including salt, sweeteners, stabilizers, and the like, reduced fat peanut butter spread formulations contain bulking agents which could include maltodextrin, corn syrup solids, or even polydextrose. To provide nutritional equivalence to peanut butter, soy protein and specific vitamins arc typically also added.

**Table 7. Reduced Fat Peanut Butter Spread Formulation**

| **Ingredient** | **Peanut Butter Spread Formulation with 20% (by weight) SDA** |
|---|---|
| | **(wt. %)** |
| Ground Roasted Peanuts | 60.5 |
| Peanut Oil (Golden Peanut Co., Alpharetta, Georgia) | 3.0 |
| SDA-enriched soybean oil (Monsanto) | 5.2 |
| Powdered Sugar (Domino, Baltimore, Maryland) | 5.0 |
| Salt (Culinox 999, Morton Salt, Chicago, Illinois) | 1.0 |
| Molasses (Domino Specialty Ingredients, Baltimore, Maryland) | 0.5 |
| Maltodextrin (Grain Processing Corp., Philadelphia, Pennsylvania) | 16.8 |
| Soy Protein Isolate (The Solae Company, St. Louis, Missouri) | 6.0 |
| Stabilizer (Sta-Set RC, Loders Croklaan, Channahon, Illinois) | 1.0 |
| Emulsifier (Dimodan® mono & diglycerides, Mono/Diglycerides, Danisco, New Century, Kansas) | 0.3 |
| Vitamins (blend of niacinamide, folic acid, pyridoxine hydrochloride, magnesium oxide, zinc oxide, ferric orthophosphate, and copper sulfate, Fortitech, Schenectady, New York) | 0.7 |
| Total | 100 |

The peanut butter spread formulation may be prepared as described in Example 3 with the exception that during the addition of the bulking agents, an intermediate process step may be added to further blend and reduce the viscosity of the nut product to allow for further processing. Specifically, extruders, such as described above, as well as homogenizers or special mills comprising a stator and a circularly rotating rotor capable of grinding the nut product while producing centrifugal forces may be used. These additional steps are described in U.S. Patent No. 7,235,277, which is hereby incorporated by reference to the extent that it is consistent herewith.
A nut butter formulation comprising stearidonic acid (SDA)-enriched oil and at least 90% (by weight) of a nut compound.
The nut butter formulation as defined above, wherein the SDA-enriched oil is selected from the group consisting of SDA-enriched soybean oil, SDA-enriched canola oil, SDA-enriched echium oil, and combinations thereof.
The nut butter formulation as defined above, wherein the SDA-enriched oil is SDA-enriched soybean oil.
The nut butter formulation as defined above, wherein the SDA-enriched soybean oil comprises from about 10% (by weight) to about 30% (by weight) SDA.
The nut butter formulation as defined above, wherein the SDA-enriched soybean oil comprises about 20% (by weight) SDA.
The nut butter formulation as defined above comprising about 375 mg SDA-enriched soybean oil per 32 gram serving of the nut butter formulation.
The nut butter formulation as defined above, wherein the nut compound is selected from the group consisting of peanuts, cashews, almonds, walnuts, pecans, filberts, macadamia nuts, Brazilians, hazel nuts, sunflower seeds, sesame seeds, pumpkin seeds, soybeans, and combinations thereof.
The nut butter formulation as defined above, wherein the formulation is a peanut butter formulation.
The nut butter formulation as defined above, wherein the nut compound is selected from the group consisting of whole nuts, split nuts, ground nuts, nut slurry, nut flour, nut oil, and combinations thereof.
The nut butter formulation as defined above, wherein the nut compound comprises at least one of whole nuts and split nuts in an amount of from about 10% (by weight) to about 25% (by weight). The nut butter formulation as defined above, further comprising an oil selected from the group consisting of hydrogenated oils, partially hydrogenated oils, and combinations thereof.
The nut butter formulation as defined above, further comprising at least one of monoglycerides, and diglycerides.
The nut butter formulation as defined above, further comprising a peanut oil.
The nut butter formulation as defined above, further comprising a sweetener.
The nut butter formulation as defined above, wherein the sweetener is selected from the group consisting of sucrose, dextrose, fructose, honey, molasses, corn syrup, brown sugar, and combinations thereof.
The nut butter formulation as defined above, further comprising a bulking agent.
The nut butter formulation as defined above, wherein the bulking agent is selected from the group consisting of polydextrose, maltodextrin, corn syrup solids, methocellulose derivatives and combinations thereof.
The nut butter formulation as defined above, further comprising a flavoring agent selected from the group of salt or salt substitute, seasoning salt, natural nut flavoring, and combinations thereof.
The nut butter formulation as defined above, further comprising at least one additional component selected from the group consisting of fillings and particulates.
A method of preparing the nut butter formulation of claim 1, the method comprising:
mixing ground, roasted nuts with stearidonic acid (SDA)-enriched oil to form a SDA-enriched nut product;
milling the SDA-enriched nut product to produce a nut butter formulation; and cooling the nut butter formulation.
The method as defined above, further comprising roasting full fat nuts and grinding the roasted full fat nuts in a mill to form the ground, roasted nuts for mixing with SDA-enriched oil.
The method as defined above, wherein the roasted nuts are ground at a temperature of from about 140 F to about 180°F prior to mixing the ground, roasted nuts with SDA-enriched oil.
The method as defined above, wherein the ground, roasted nuts are mixed with SDA-enriched oil under temperature conditions of from about 140 F to about 180 F.
The method as defined above, wherein the SDA-enriched oil is selected from the group consisting of SDA-enriched soybean oil, SDA-enriched canola oil, SDA-enriched echium oil, and combinations thereof.
The method as defined above, wherein the SDA-enriched oil is SDA-enriched soybean oil.
The method as defined above, wherein the SDA-enriched soybean oil comprises from about 10% (by weight) to about 30% (by weight) SDA.
The method as defined above, wherein the SDA-enriched soybean oil comprises about 20% (by weight) SDA.
The method as defined above, wherein the ground, roasted nuts are selected from the group consisting of peanuts, cashews, almonds, walnuts, pecans, filberts, macadamia nuts, Brazilians, hazel nuts, sunflower seeds, sesame seeds, pumpkin seeds, soybeans, and combinations thereof.
The method as defined above, further comprising mixing at least one of a hydrogenated oil, partially hydrogenated oil, soybean oil, canola oil, rapeseed oil, cottonseed oil, linseed oil, coconut oil, walnut oil, or palm oil with the ground, roasted nuts and SDA-enriched oil.
The method as defined above, further comprising mixing at least one of a sweetener, flavoring agent, or bulking agent with the ground, roasted nuts and SDA-enriched oil.
The method as defined above, wherein the SDA-enriched nut product is milled at a temperature of from about 155 F to about 170 F.
The method as defined above, further comprising cooling the SDA-enriched nut product to a temperature of about 125 F prior to milling.
The method as defined above, further comprising deaerating the milled SDA-enriched nut product.
The method as defined above, further comprising packaging the cooled nut butter formulation.
The method as defined above, further comprising mixing at least one additional component selected from the group consisting of fillings and particulates with the cooled nut butter formulation during packaging.
A nut butter spread formulation comprising stearidonic acid (SDA)-enriched oil and less than 90% (by weight) of a nut compound.
The nut butter spread formulation as defined above, wherein the SDA-enriched oil is selected from the group consisting of SDA-enriched soybean oil, SDA-enriched canola oil, SDA-enriched echium oil, and combinations thereof.
The nut butter spread formulation as defined above, wherein the SDA-enriched oil is SDA-enriched soybean oil.
The nut butter spread formulation as defined above, wherein the SDA-enriched soybean oil comprises from about 10% (by weight) to about 30% (by weight) SDA.
The nut butter spread formulation as defined above, wherein the SDA-enriched soybean oil comprises about 20% (by weight) SDA.
The nut butter spread formulation as defined above comprising about 375 mg SDA-enriched soybean oil per 32 gram serving of the nut butter spread formulation.
The nut butter spread formulation as defined above, wherein the nut compound is selected from the group consisting of peanuts, cashews, almonds, walnuts, pecans, filberts, macadamia nuts, Brazilians, hazel nuts, sunflower seeds, sesame seeds, pumpkin seeds, soybeans, and combinations thereof.
The nut butter spread formulation as defined above, wherein the spread formulation is a peanut butter spread formulation.
The nut butter spread formulation as defined above, wherein the nut compound is selected from the group consisting of whole nuts, split nuts, ground nuts, nut slurry, nut flour, nut oil, and combinations thereof.
The nut butter spread formulation as defined above, wherein the nut compound comprises at least one of whole nuts and split nuts in an amount of from about 10% (by weight) to about 25% (by weight).
The nut butter spread formulation as defined above, further comprising an oil selected from the group consisting of hydrogenated oils, partially hydrogenated oils, and combinations thereof.
The nut butter spread formulation as defined above, further comprising at least one of monoglycerides and diglycerides.
The nut butter spread formulation as defined above, further comprising peanut oil.
The nut butter spread formulation as defined above, further comprising a sweetener.
The nut butter spread formulation as defined above, wherein the sweetener is selected from the group consisting of sucrose, dextrose, fructose, honey, molasses, corn syrup, brown sugar, and combinations thereof.
The nut butter spread formulation as defined above, further comprising a bulking agent.
The nut butter spread formulation as defined above, wherein the bulking agent is selected from the group consisting of polydextrose, maltodextrin, corn syrup solids, methocellulose derivatives and combinations thereof.
The nut butter spread formulation as defined above, further comprising a flavoring agent selected from the group of salt or salt substitute, seasoning salt, natural nut flavoring, and combinations thereof.
The nut butter spread formulation as defined above,, further comprising at least one additional component selected from the group consisting of fillings and particulates.
A method of preparing the nut butter spread formulation as defined above, the method comprising:
mixing ground, roasted nuts with stearidonic acid (SDA)-enriched oil to form a SDA-enriched nut product;
milling the SDA-enriched nut product to produce a nut butter formulation; and cooling the nut butter formulation.
The method as defined above, further comprising roasting full fat nuts and grinding the roasted full fat nuts in a mill to form the ground, roasted nuts for mixing with SDA-enriched oil.
The method as defined above, wherein the roasted nuts are ground at a temperature of from about 140 F to about 180°F prior to mixing the ground, roasted nuts with SDA-enriched oil.
The method as defined above, wherein the ground, roasted nuts are mixed with SDA-enriched oil under temperature conditions of from about 140 F to about 180 F.
The method as defined above, wherein the SDA-enriched oil is selected from the group consisting of SDA-enriched soybean oil, SDA-enriched canola oil, SDA-enriched echium oil, and combinations thereof.
The method as defined above, wherein the SDA-enriched oil is SDA-enriched soybean oil.
The method as defined above, wherein the SDA-enriched soybean oil comprises from about 10% (by weight) to about 30% (by weight) SDA.
The method as defined above, wherein the SDA-enriched soybean oil comprises about 20% (by weight) SDA.
The method as defined above, wherein the ground, roasted nuts are selected from the group consisting of peanuts, cashews, almonds, walnuts, pecans, filberts, macadamia nuts, Brazilians, hazel nuts, sunflower seeds, sesame seeds, pumpkin seeds, soybeans, and combinations thereof.
The method as defined above, further comprising mixing at least one of a hydrogenated oil, partially hydrogenated oil, soybean oil, canola oil, rapeseed oil, cottonseed oil, linseed oil, coconut oil, walnut oil, or palm oil with the ground, roasted nuts and SDA-enriched oil.
The method as defined above, further comprising mixing at least one of a sweetener, flavoring agent, or bulking agent with the ground, roasted nuts and SDA-enriched oil.
The method as defined above, wherein the SDA-enriched nut product is milled at a temperature of from about 155 F to about 170 F.
The method as defined above, further comprising cooling the SDA-enriched nut product to a temperature of about 125 F prior to milling.
The method as defined above, further comprising deaerating the milled SDA-enriched nut product.
The method as defined above, further comprising packaging the cooled nut butter formulation. The method as defined above, further comprising mixing at least one additional component selected from the group consisting of fillings and particulates with the cooled nut butter formulation during packaging.

## Claims

1. A peanut butter formulation or peanut butter spread formulation comprising stearidonic acid (SDA)-enriched oil wherein (a) the formulation is a peanut butter formulation comprising at least 90% (by weight) of a peanut compound or (b) the formulation is a peanut butter spread formulation comprising less than 90% (by weight) of a peanut compound, wherein the SDA-enriched oil is a transgenic soybean oil comprising from about 10% (by weight) to about 30% (by weight) SDA.

2. The peanut butter formulation wherein the formulation is a peanut butter formulation comprising at least 90% (by weight) of a peanut compound.

3. The peanut butter spread formulation wherein the formulation is a peanut butter spread formulation comprising less than 90% (by weight) of a peanut compound

4. The peanut butter formulation of any one of claims 1 to 3, wherein the nut compound comprises at least one of whole nuts and split nuts in an amount of from about 10% (by weight) to about 25% (by weight).

5. The peanut butter formulation or peanut butter spread formulation of any one of claims 1 to 4, further comprising either: an oil selected from the group consisting of a hydrogenated oil oils, a partially hydrogenated oil oils, and a combination combinations thereof; at least one of a monoglycerides, and a diglycerides; a peanut oil; a sweetener selected from the group consisting of sucrose, dextrose, fructose, honey, molasses, corn syrup, brown sugar, and a combination combinations thereof; a bulking agent selected from the group consisting of polydextrose, maltodextrin, corn syrup solids, a methocellulose derivatives and a combination combinations thereof; or a flavoring agent selected from the group of salt or salt substitute, seasoning salt, natural nut flavoring, and a combination combinations thereof.

6. The peanut butter formulation or peanut butter spread formulation of any one of claims 1 to 5, further comprising at least one additional component selected from the group consisting of a filling and a particulate.

7. The peanut butter formulation or peanut butter spread formulation of any one of claims 1 to 6, further comprising 0.3 wt.% to 2.0 wt.% of a partially hydrogenated oil having a solids fat index of from about 19% to 25.5% at 50°F (10°C), from about 10.5% to about 15.5% at 70°F (21°C), and from about 0.5% to about 4.0% at 92°F (33°C).

8. A method of preparing the peanut butter formulation or peanut butter spread formulation of claim 1 to 7, the method comprising:
mixing ground, roasted peanuts with a transgenic oil containing from 10 to 30 wt.% comprising stearidonic acid (SDA) under temperature conditions from 140°F to 180°F -enriched oil to form a SDA-enriched peanut product;
dearating the SDA-enriched peanut product to remove residual air;
cooling the SDA-enriched peanut product to a temperature of about 125°F prior to milling;
milling the SDA-enriched peanut product to produce a peanut butter formulation; and
cooling the peanut butter formulation or peanut butter spread formulation.

9. The method of claim 8, further comprising roasting full fat peanuts and grinding the roasted full fat peanuts in a mill to form the ground, roasted peanuts for mixing with SDA-enriched the transgenic oil.

10. The method of claim 9, wherein the roasted peanuts are ground at a temperature of from about 140°F to about 180°F prior to mixing the ground, roasted peanuts with SDA-enriched the transgenic oil.

11. The method of claim 8 wherein the peanut product, after milling, is further fine milled to produce a peanut butter formulation or peanut butter spread formulation having a particle size of about 150 microns.

12. The method of claim 6 wherein the peanut product, after milling, is homogenized at a pressure from 6,000 psig to 8,000 psig.

13. The method of claim 8, wherein the SDA-enriched soybean transgenic oil is SDA-enriched soybean oil containing from 10 to 30 wt.% SDA.
